# EUROPEAN PATENT SPECIFICATION

(11) **EP 2 590 179 B1**
(45) Date of publication and mention of the grant of the patent: **11.10.2017**
(21) Application number: 11800985.1
(22) Date of filing: 01.07.2011
(51) Int. Cl.: H01C 7/02, H01C 1/028, H01C 1/14, H01M 2/34, H01M 10/42

(54) **PTC DEVICE AND SECONDARY BATTERY HAVING SAME**
PTC-VORRICHTUNG UND SEKUNDÄRBATTERIE DAMIT
DISPOSITIF CTP ET BATTERIE RECHARGEABLE DOTÉE DE CELUI-CI

(30) Priority: 02.07.2010 JP 2010152026
(43) Date of publication of application: 08.05.2013
(73) Proprietor: Littelfuse Japan G.K., Tokyo 1050014 (JP); FDK Corporation, Tokyo 105-8677 (JP)
(72) Inventor: TANAKA, Arata, Inashiki-shi Ibaraki 300-0626 (JP); YAMAOKA, Toshikazu, Inashiki-shi Ibaraki 300-0626 (JP); MIYAGI, Haruhisa, Inashiki-shi Ibaraki 300-0626 (JP)
(74) Representative: Johnstone, Douglas Ian
(86) International application number: PCT/JP2011/065143
(87) International publication number: WO 2012/002523

(56) References cited:
- EP-A1- 1 681 686
- EP-A2- 1 577 905
- WO-A1-99/05689
- WO-A1-2010/053158
- JP-A- 2 058 202
- JP-A- 6 243 856
- JP-A- 8 128 901
- JP-A- 58 188 066
- JP-A- 2007 180 382
- JP-A- 2007 227 549
- JP-A- 2007 305 870
- JP-A- 2008 053 652
- JP-A- 2010 093 258
- US-A1- 2005 266 302

## Description

### Technical Field

The present invention relates to a PTC device as well as an electrical device, for example a secondary battery, comprising same.

### Background Art

A polymer PTC component, comprising a laminar PTC element containing a conductive filler and a polymer material, and a metal electrode disposed on a surface of each side of the polymer PTC element, is widely used in various electrical devices. For example, such a PTC component is used as a circuit protection device in a secondary battery charging circuit in order to prevent a problem of overcharging and the like when a secondary battery of a cell phone is charged. This PTC component is disposed in a protection circuit via leads, and a PTC device comprising the PTC component and the leads, and the protection circuit are disposed outside the positive electrode terminal; these together make up an electrical device, and are used as the so-called a "battery pack". Since an electrical apparatus has the battery pack embedded therein, the electrical apparatus may be made more compact if the embedded battery pack could be made more compact.

On the other hand, various types of dry-cell type secondary batteries are used. Among such secondary batteries, in the case of a size AA or a size AAA cell for example, because there is a constraint in enlarging its volume it occupies, no PTC component is not provided therein.

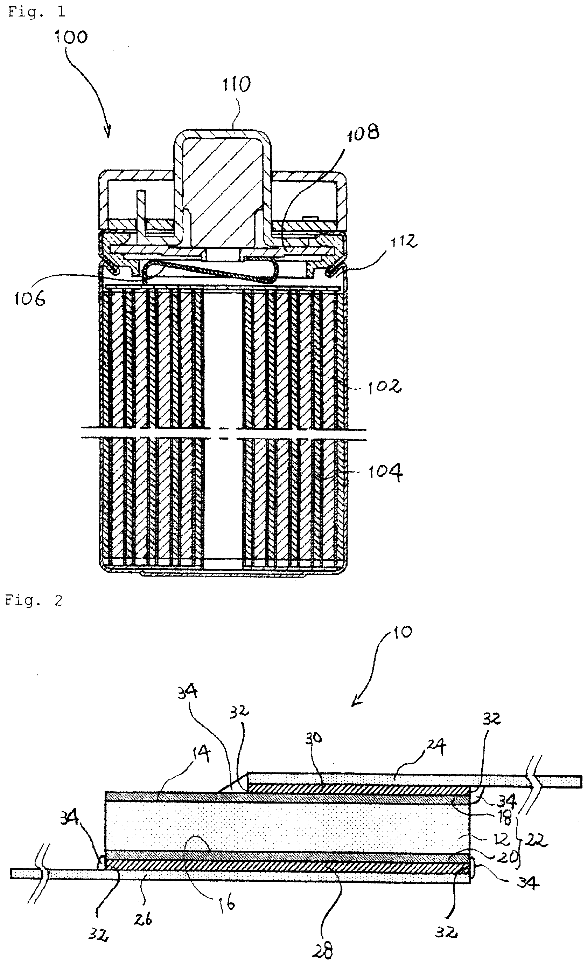

Figure 1 shows a nickel hydride battery, as an example of such a dry-cell type secondary battery, schematically as a cross-sectional view so that its internal structure may be seen. In this battery 100, nickel hydroxide is used as a positive electrode 102 and a hydrogen absorbing alloy is used as a negative electrode 104, with a separator and an electrolyte present between the electrodes. When discharging for example, hydrogen absorbed in the alloy discharges electrons, and hydrogen ions migrate in the electrolyte from the negative electrode to the positive electrode. The positive electrode is connected to a positive electrode tab 106, which is connected to a positive electrode terminal 110 via a sealing plate 108.

The electrolyte used comprises an alkali as a base and contains for example a potassium salt such as potassium hydroxide. Various salts, such as those of sodium, lithium, etc., are used as other alkalis in some cases. Such alkalis are generally corrosive so that the positive electrode tab is exposed to an environment of such alkaline. Therefore, a material having resistance to the alkaline corrosion needs to be selected for the material to be used as the positive electrode tab. For example, nickel is used as the material of the positive electrode tab. Nickel forms a passive material in the alkaline environment, as a result of which it has resistance to the corrosion.

### Prior Art Reference

### Patent Reference

Patent Reference 1: Japanese Patent Publication No. 2008-181855

### Summary of the Invention

### Problem to be Solved by the Invention

The inventors concentrated their investigation on making a PTC device and an electrical device such as a battery pack comprising the PTC device and a secondary battery, and a dry-cell type secondary battery more compact, as a result of which it has been concluded that, in the above dry-cell type secondary battery, if the PTC device could be disposed in a space 112 where the positive electrode tab 106 exists (this space may herein also be called a "positive electrode tab space"), the volume of the secondary battery may be made smaller. Also, it has been concluded that, in the battery pack, if the PTC device disposed outside the secondary battery could be disposed within the secondary battery, the volume of the battery pack may be made smaller.

However, in order to dispose the PTC device in the positive electrode tab space, or to dispose the PTC device within the secondary battery of the battery pack, the alkaline corrosion as described above needs to be considered. After further studies as to this, it has been found that, among the various elements forming the PTC device, by covering a part(s) that may be adversely affected by the corrosion, etc., by the alkali contained in the electrolyte of the secondary battery with a polypropylene resin, a nylon resin or an epoxy resin, such adverse effects can be suppressed to a minimum, resulting in the PTC device of the present invention.

WO 99/05689, on which the preamble of claim 1 is based, discloses an electrical device having a PTC component sandwiched between a pair of metal foil electrodes. An electrical lead is attached to each of the electrodes by solder, and the device is encapsulated in powdered epoxy.

US 2005/0266302 discloses a secondary battery having a secondary protective device. The secondary protective device has a PTC thermistor beneath a bimetal strip and on top of a lead wire, and another lead wire is connected to the bimetal strip.

EP 1681686 discloses a PTC device having a PTC element sandwiched between a pair of electrodes. A current lead is attached to each electrode. A molding part encases the PTC element and the electrodes and the leads extend beyond the molding part.

JP 2008-0532652 discloses a PTC element comprising a conductive polymer sandwiched between a pair of electrode plates. A protective film is formed on the exposed surface of the conductive polymer that is not covered by the electrode plates. A tag block is spot welded to one electrode plate and the other electrode plate is spot welded to a clad board.

### [Means to Solve the Problem]

Therefore, according to the first aspect, the present invention provides a PTC device which comprises: (i) a PTC component comprising: (A) a laminar polymer PTC element comprising (a1) an electrically conductive filler, and (a2) a polymer material, and (B) a metal electrode disposed on a surface of each side of the polymer PTC element; and (ii) a lead positioned at least in part on the metal electrode of the PTC component, and connected to the metal electrode by an electrically conductive material; characterized in that the electrically conductive material is disposed between the lead and the metal electrode; and a side part of the electrically conductive material is an exposed part, wherein substantially only the exposed part of said electrically conductive material is covered by a protective member comprising a polypropylene resin, a nylon resin or an epoxy resin.

Among the elements constituting the PTC device of the present invention, the PTC component is well-known, and such a PTC component may be used in the present invention. The lead is an element required to electrically connect the PTC component to a prescribed circuit; this per se also is well-known, and such a lead, e.g. a nickel lead, a nickel-plated stainless steel lead, a nickel-iron alloy (kovar) lead, and the like, may be used in the present invention. Further, the electrically conductive material connecting the metal electrode of the PTC component to the lead is well-known, and is not restricted in particular as long as they are able to be electrically connected to each other; in the present invention also, such an electrically conductive material may be used. For example, a solder, a solder paste, an electrically conductive adhesive, and the like, may be used.

In the PTC device, such electrically conductive material may be a state (for example, a state after curing of an element of the composition such as a setting resin) which is changed from its original state (for example, a state before curing of the element of the composition such as a setting resin) in order to have a function for connecting.

The present invention is useful in a case where such an electrically conductive material may be adversely affected, e.g. corroded, by the electrolyte constituting the battery, in particular an alkaline component contained therein, for example a salt and/or an ion of an alkaline metal such as sodium, potassium, lithium, etc. In particular, such case corresponds to a case wherein an electrically conductive material contains, for example, tin, zinc, lead, or the like. The present invention is particularly useful when using in particular a solder as the electrically conductive material, in particular a lead-free solder, for example an alloy solder of tin, silver and copper, an alloy solder of tin and bismuth, an alloy of tin and indium, or the like.

In the present invention, "a polypropylene resin, a nylon resin, or an epoxy resin" may be any commonly-known resin as long as the problem of the invention can be solved. For example, in the case of the polypropylene resin, a syndiotactic type is preferably used. For example, in the case of the nylon resin, 6,6-nylon is preferably used, and a resin with high crystallinity is more preferably used. For example, in the case of the epoxy resin, particularly a resin with an excellent chemical resistance, for example a two-component epoxy resin formed from an epoxy resin prepolymer and a polyamine resin is preferably used.

In the PTC device of the present invention, the protective member may be in any suitable form. The protective member may be in the form of a protective coating. In this case, the resin as described above is applied, for example by brushing, spraying, etc., so as to cover the exposed part. As needed, it is preferred that a suitable form for applying the resin in the above way, for example, a solution, a dispersed liquid or the like of the resin is obtained by using a solvent or the like, and this is applied, and as necessary, the solvent or the like is dried (for example, removed by heating). Specifically, it is preferred that this form is used when forming a protective member containing an epoxy resin.

In the broadest aspect of the present invention, in the PTC device of the present invention, the "protective member comprising a polypropylene resin, a nylon resin or an epoxy resin" is disposed such that at least a portion of a periphery of the PTC component is covered. In other words, said portion is the exposed part of the electrically conductive material as described above. For example, substantially the exposed part only, or the exposed part and its surrounding part are covered with such member.

Various such PTC devices of the present invention can be disposed inside a secondary battery, in particular within its positive electrode tab space, and function as a positive electrode tab. Therefore, the present invention, in the second aspect, provides a secondary battery as an electrical device. Such a secondary battery may be a dry cell type or in the form of a battery pack including a PTC device on its outside. It is noted that as far as the PTC device of the present invention can be used as a protective component, the present invention also provides for other electrical device containing such a PTC device.

This secondary battery comprises a positive electrode, a negative electrode and a separator and an electrolyte disposed therebetween, and is characterized by having the PTC device of the present invention, more specifically the leads of the PTC device, electrically connected, directly or indirectly, to and between the positive electrode and the positive electrode tab. Such a secondary battery of the present invention may be a dry cell type or in the form of a battery pack including a protection circuit on its outside of the secondary battery.

### Effect of the Invention

In the PTC device of the present invention, because the exposed part of the electrically conductive material, which is likely to be adversely affected by the corrosion due to an alkali contained in the electrolyte, is covered by the protective member comprising "a polypropylene resin, a nylon resin or an epoxy resin" and these resins have alkali resistance, even if the PTC device is disposed under an alkaline environment, the protective member suppresses that the alkali substantially reaches the electrically conductive material, as a result of which the effect of the corrosion on the electrically conductive material, and therefore the PTC device, is able to be suppressed to a minimum.

Thus, even if the PTC device is disposed under an environment of the electrolyte contained in the secondary battery, or the electrolyte and the PTC device accidentally come in contact, the adverse effect that the PTC device receives from the electrolyte is minimal, so that the PTC device can function as a circuit protection device.

In particular, when the PTC device is disposed in an extra space (in the sense that the PTC device is able to be accommodated therein) within the secondary battery, a space needed for the PTC device may be saved. For example, the PTC device of the present invention may be disposed in the above mentioned positive electrode tab space of the secondary battery.

### Brief Description of Drawings

[Figure 1] Figure 1 shows a cross-sectional view of a secondary battery with its internal structure illustrated schematically.
[Figure 2] Figure 2 shows a PTC device according to one embodiment of the present invention schematically in its cross-section.
[Figure 3] Figure 3 shows schematically, in cross-section, a PTC device included for background information only.
[Figure 4] Figure 4 shows schematically, in cross-section, a further PTC device included for background information only.
[Figure 5] Figure 5 shows the secondary battery illustrated in Figure 1 having a PTC device of the present invention in a cross-sectional view.
[Figure 6] Figure 6 shows the measured results of the resistance-temperature property (R-T property) of the PTC device A of the present invention produced in Example 1.

### Description of Embodiments

The present invention is described in more detail below with reference to the drawings.

Figure 2 shows a PTC device according to one embodiment of the present invention. The illustrated PTC device 10 comprises a PTC component 22 having a laminar polymer PTC element 12 containing an electrically conductive filler and a polymer material, and metal electrodes (e.g. metal foil electrodes) 18 and 20 on the surfaces 14 and 16 on the both sides of the PTC element, and the leads 24 and 26.

The lead 24 is connected electrically to a part of the metal electrode 18 by an electrically conductive material 30, and the lead 26 is connected electrically to the entire metal electrode 20 by an electrically conductive material 28. As a result, the electrically conductive material has an exposed part on the side surface 32 of the PTC component 22 if there is no protective member present.

In the PTC device 10 of the present invention, such exposed parts of the electrically conductive material are covered by the protective members as a protective coating 34 comprising a polypropylene resin, a nylon resin or an epoxy resin.

The protective coating may be in any form; in the embodiment shown in Figure 2, a side part 32 of the electrically conductive material as the exposed part and a relatively narrow region(s) above and/or below the side part are covered by the protective coating 34. Such a protective coating may be formed by applying a protective coating forming material (e.g. an epoxy resin or a solution or dispersion containing it) by brushing, spraying, etc., and hardening it, and further removing the solvent as needed.

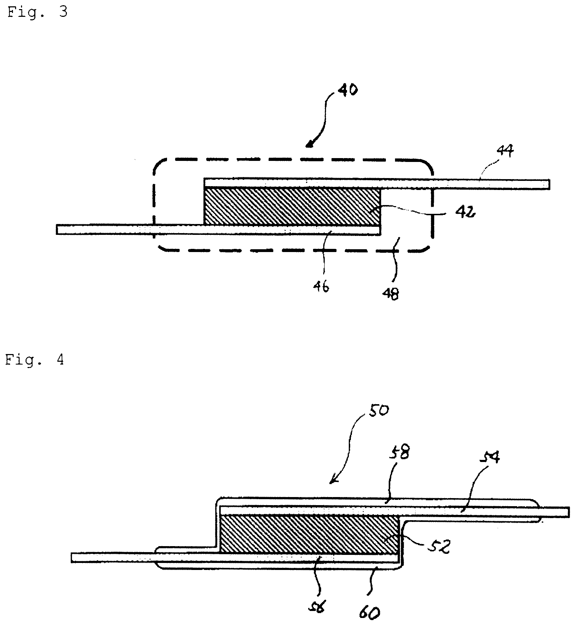

Figure 3 shows schematically a PTC device included for background information only. In the arrangement shown, the PTC device 40 comprises a PTC component 42 and leads 44 and 46 on its both sides. This PTC device has a molded member 48 around it. In the arrangement shown, the PTC component 42 is illustrated as a whole for the sake of simplicity, and illustration of the electrically conductive materials positioned between the PTC component 42 and the leads 44, 46 is omitted.

Such a PTC device may be produced by inserting a PTC component connected to leads by a conductive material into a mold, then performing injection molding wherein a molding material containing or consisting of a polypropylene resin, a nylon resin or an epoxy resin in its molten state is injected into the mold and solidified, thereby forming the molded member 48 as a protective member so as to cover the exposed surface of the PTC component 42 including the exposed parts of the electrically conductive material. However, as shown in Figure 3, the ends of the leads protrude from the molded member. Therefore, there is a need for forming the mold and inserting the PTC component in the mold so that the molded member will not be formed on the ends of the leads during the injection molding.

Figure 4 shows a further PTC device 50 included for background information only. In the arrangement shown, the PTC device comprises a PTC component 52 and leads 54 and 56 on its both sides. The PTC device is sandwiched between two pieces of films 58 and 60, with the ends of the leads 54 and 56 protruding outward. These films are formed of the material comprising a polypropylene resin, a nylon resin or an epoxy resin, and these films constitute the protective member of the PTC device. As is easily understood, the films 58 and 60 cover the exposed surface of the PTC component and the exposed parts of the leads (excluding, however, their ends), including the exposed parts of the electrically conductive material, and can function as a protective member of the PTC device. As in Figure 3, in the arrangement shown, the PTC component 52 is illustrated as a whole for the sake of simplicity, and illustration of the electrically conductive materials positioned between the PTC component 52 and the leads 54 and 56 is omitted.

Such a PTC device may be produced by sandwiching a PTC component having leads electrically connected by a conductive material between two pieces of the films, with the ends of the leads protruding from the films, and then compression bonding, for example thermal compression bonding (i.e. heat sealing) the films together. In this arrangement, it is preferred that the film has an additional layer(s) on its inside to secure an improved adhesion between the film and the PTC component and the lead. As to such the additional layer, the EVA layer, the EVOH layer, the PVDF layer as described above are suitably used.

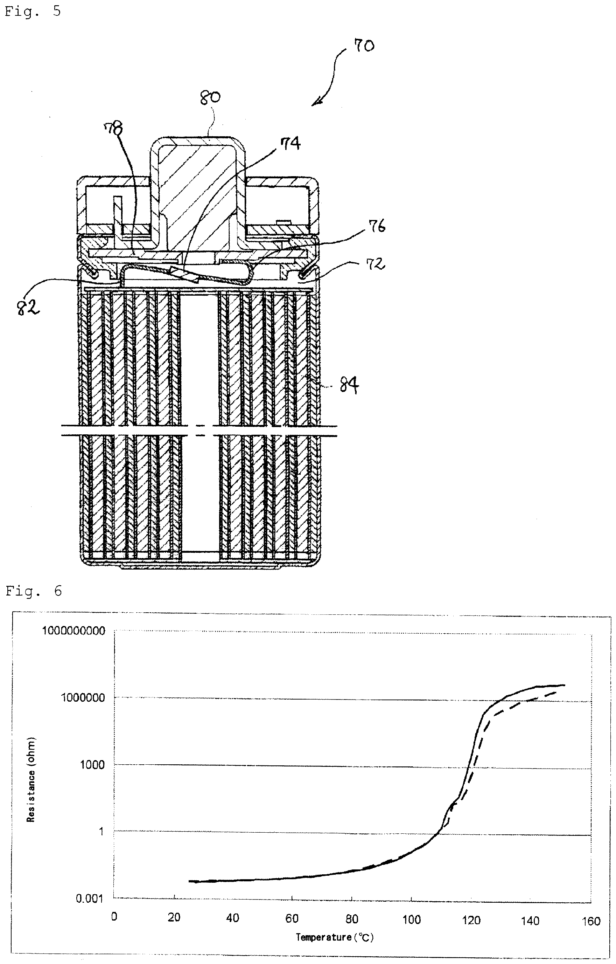

Figure 5 shows, schematically as in Figure 1, a secondary battery of the present invention with a PTC device of the present invention incorporated therein. In the embodiment shown, the secondary battery 70 has the PTC device 74 of the present invention inside a positive electrode tab space 72, and is characterized by the end of one lead 76 being connected to a positive electrode terminal 80 via a sealing plate 78 and the other lead 82 being connected to a positive electrode 84. Thus, with the exception of the PTC device of the present invention being disposed instead of the positive electrode tab, the other parts of the secondary battery of the present invention may be the same as the known secondary battery.

In other embodiment, the secondary battery of the present invention has a protection circuit on its outside and comprises the PTC device of the present invention disposed on the outside of the secondary battery, for example, on the outside of the positive electrode. In this case, in such a secondary battery, the PTC device is disposed within the protection circuit, these together work to protect the secondary battery, and the secondary battery, the PTC device and the protection circuit constitute a battery pack. Thus, even when the PTC device is disposed outside of the secondary battery, if there is a slight leak of the electrolyte in the secondary battery, the adverse effects from the electrolyte to the electrically conductive material may be suppressed.

### Example 1

A PTC device A as shown in Figure 4, introduced as background information only, was produced by thermal compression-binding a PTC component sandwiched by films (provided that the end of the lead was exposed). During the thermal compression binding, only the film portion extending outside from around the PTC component was pressed so that force would not be applied to the PTC component (the lead section was pressed).

The film used was a laminated film of a polypropylene resin layer and a polyethylene resin layer (thickness: 100 µm). This film was used so that the polypropylene resin layer was on the outside.

Other conditions are shown below:
PTC component used (trade name: Polyswitch, manufactured by Tyco Electronics Japan G.K.)
Lead: nickel (trade name: NB201, manufactured by Neomax Co., Ltd., thickness: 150 µm)
Conductive material: lead-free solder (alloy solder of tin, silver and copper)
Thermal compression binding condition: Pressed for 10 -40 seconds at a temperature of 160°C-210°C under a pressure of 0.4 Mpa.

### Example 2

A PTC device B shown in Figure 3, introduced as background information only, was produced by using the same PTC component as Example 1 and insert-molding a polypropylene resin. The polypropylene resin used was, the trade name: Prime Polypro, manufactured by Prime Polymer Co., Ltd. The conditions for the PTC device B were the same as for the PTC device A except for the protective member.

The PTC devices A and B thus obtained were subjected to an alkali immersion experiment which was conducted by immersing them in a KOH aqueous solution (1N) at 60°C for 3 months. The condition of the interface between the protective member and the lead was observed to evaluate the effect of alkali. A holding current test (I-V test) was performed on the PTC devices after the immersion. Also, for comparison, the same test was conducted on other PTC components having the same specification as the PTC components used in the production of the PTC devices. The results are shown below:

| | PTC device A | | PTC device B | |
|---|---|---|---|---|
| | Rᵢₙᵢₜᵢₐₗ | Iₘₐₓ | Rᵢₙᵢₜᵢₐₗ | Iₘₐₓ |
| After alkali immersion | 5.5 | 2.979 | 5.0 | 3.332 |
| PTC Component 1 | 5.3 | 3.366 | 5.5 | 2.983 |
| PTC Component 2 | 5.7 | 3.047 | 5.1 | 3.345 |

In the table, Rᵢₙᵢₜᵢₐₗ is the initial resistance (unit: mΩ) and Iₘₐₓ is the maximum current (unit: Amps) . The initial resistance was measured at 60°C using Milliohm HiTester manufactured by HIOKI E.E. CORPORATION.

There was no difference that is visually determinable in the conditions of the interface between the protective member and the lead in the PTC devices A and B before and after the alkali immersion test.

In the above table, the measured results on the PTC components having the same specification as the PTC components used in the production of the PTC devices A and B (provided that, not immersed in alkali) are shown as "PTC Component 1" and "PTC Component 2", and those immersed in the KOH aqueous solution (1N) at 60°C for 3 months are shown as "After alkali immersion".

"PTC Component 1" and "PTC Component 2" are the measured values as a component that has not been affected by alkali; in the PTC device A, the initial resistance values are 5.3 mΩ and 5.7 mΩ, and the initial resistance value of "After alkali immersion" is 5.5 mΩ. Thus, the resistance can be said to be substantially unchanged. Also, the Iₘₐₓ values are 3.366 A and 3.047 A for PTC component 1 and PTC component 2 respectively, and 2.979 A for "After alkali immersion". Therefore, the Iₘₐₓ is also substantially unchanged. In the PTC device B, the initial resistance values for PTC component 1 and PTC component 2 are 5.5 mΩ and 5.1 mΩ, and 5.0 mΩ for "After alkali immersion". In this case also, as in the previous case, these values can be said to be within a resistance range that is substantially unchanged. If it had been affected by immersion, it is predicted that the resistance would have increased greatly beyond the 5 mΩ range. With respect to the Iₘₐₓ, the values which were 3.345 A and 2.983 A for PTC component 1 and PTC component 2 respectively, was 3.332 A for "After alkali immersion". Therefore, it can be also said that this is substantially unchanged.

From these results, it can be seen that the holding current property of the PTC device is substantially unaffected even if the protective member is provided around the PTC device as in the examples.

For confirmation, the resistance-temperature (R-T) property of the PTC device A before and after the above alkali immersion experiment was measured. The result is shown in Figure 6. In the chart of Figure 6, the broken line is the measured result of the PTC device after the alkali immersion experiment, and the solid line is the measured result before the alkali immersion experiment. It can be seen that the PTC device of the examples, being introduced as background information only, is substantially unaffected by alkali. Industrial Applicability

The PTC device of the present invention can suppress the effect of electrolyte in the battery to a minimum even when disposed in the extra space within the secondary battery.

### [Explanation of the Legends]

10 - PTC device; 12 - polymer PTC element;
14, 16 - surface; 18, 20 - metal electrode;
22 - PTC component; 24, 26 - lead;
28, 30 - electrically conductive material; 32 - side;
34 - protective coating; 40 - PTC device;
42 - PTC component; 44, 46 - lead; 48 - molded member;
50 - PTC device; 52 - PTC component; 54, 56 - lead;
58, 60 - film; 70 - secondary battery;
72 - positive electrode tab space; 74 - PTC device;
76 - lead; 78 - sealing plate; 80 - positive electrode;
82 - lead; 100 - nickel hydride battery;
102 - positive electrode; 104 - negative electrode;
106 - positive electrode tab; 108 - sealing plate;
110 - positive electrode terminal.

## Claims

1. A PTC device (10) which comprises:
(i) a PTC component (22) comprising:
(A) a laminar polymer PTC element (12) comprising
(a1) an electrically conductive filler, and
(a2) a polymer material, and
(B) a metal electrode (18, 20) disposed on a surface (14, 16) of each side of the polymer PTC element (12); and
(ii) a lead (24, 26) positioned at least in part on the metal electrode (18, 20) of the PTC component (22), and connected to the metal electrode (18, 20) by an electrically conductive material (28, 30);
**characterized in that**
the electrically conductive material (28, 30) is disposed between the lead (24, 26) and the metal electrode (18, 20); and
a side part (32) of the electrically conductive material (28, 30) is an exposed part, wherein substantially only the exposed part of said electrically conductive material (28, 30) is covered by a protective member (34) comprising a polypropylene resin, a nylon resin or an epoxy resin.

2. The PTC device according to Claim 1, wherein the electrically conductive material (28, 30) contains tin.

3. A secondary battery (70) comprises a positive electrode (84), a negative electrode, and a separator and an electrolyte disposed therebetween, and includes the PTC device (74) according to Claim 1 or 2 which is disposed between the positive electrode (84) and a terminal (80) of the positive electrode.

4. The secondary battery according to Claim 3, which is a dry-cell type, wherein the PTC device (74) is disposed within a positive electrode tab space (72).

5. A secondary battery which is in the form of a battery pack, including the PTC device according to Claim 1 or 2, and a protection circuit, which are both disposed outside of the battery.

## Patentansprüche

1. PTC-Vorrichtung (10), die Folgendes umfasst:
(i) eine PTC-Komponente (22), die Folgendes umfasst:
(A) ein laminares polymeres PTC-Element (12), das Folgendes umfasst:
(a1) einen elektrisch leitfähigen Füllstoff und
(a2) ein Polymermaterial, und
(B) eine Metallelektrode (18, 20), die auf einer Oberfläche (14, 16) jeder Seite des polymeren PTC-Elements (12) angeordnet ist; und
(ii) eine Leitung (24, 26), die wenigstens teilweise auf der Metallelektrode (18, 20) der PTC-Komponente (22) positioniert und mit der Metallelektrode (18, 20) durch ein elektrisch leitfähiges Material (28, 30) verbunden ist; **dadurch gekennzeichnet, dass**
das elektrisch leitfähige Material (28, 30) zwischen der Leitung (24, 26) und der Metallelektrode (18, 20) angeordnet ist; und
ein Seitenteil (32) des elektrisch leitfähigen Materials (28, 30) ein exponierte Teil ist, wobei im Wesentlichen nur der exponierte Teil des genannten elektrisch leitfähigen Materials (28, 30) durch ein Schutzelement (34) bedeckt ist, das ein Polypropylenharz, ein Nylonharz oder ein Epoxidharz umfasst.

2. PTC-Vorrichtung nach Anspruch 1, wobei das elektrisch leitfähige Material (28, 30) Zinn enthält.

3. Sekundäre Batterie (70), die eine positive Elektrode (84), eine negative Elektrode und einen Separator und einen dazwischen befindlichen Elektrolyt umfasst und die PTC-Vorrichtung (74) nach Anspruch 1 oder 2 beinhaltet, die zwischen der positiven Elektrode (84) und einem Anschluss (80) der positiven Elektrode angeordnet ist.

4. Sekundäre Batterie nach Anspruch 3, die vom Trockenzellentyp ist, wobei die PTC-Vorrichtung (74) in einem Raum (72) für das positive Elektrodenband angeordnet ist.

5. Sekundäare Batterie, die in Form einer Batteriepackung vorliegt, einschließlich der PTC-Vorrichtung nach Anspruch 1 oder 2 und einer Schutzschaltung, die beide außerhalb der Batterie angeordnet sind.

## Revendications

1. Dispositif CTP (10) qui comprend :
(i) un composant CTP (22) comprenant :
(A) un élément CTP polymère laminaire (12) comprenant
(a1) une substance de remplissage électriquement conductrice, et
(a2) une matière polymère, et
(B) une électrode en métal (18, 20) disposée sur une surface (14, 16) de chaque côté de l'élément CTP polymère (12) ; et
(ii) un conducteur (24, 26) positionné au moins en partie sur l'électrode en métal (18, 20) du composant CTP (22), et connecté à l'électrode en métal (18, 20) par une matière électriquement conductrice (28, 30) ;
**caractérisé en ce que**
la matière électriquement conductrice (28, 30) est disposée entre le conducteur (24, 26) et l'électrode en métal (18, 20) ; ; et
une partie latérale (32) de la matière électriquement conductrice (28, 30) est une partie exposée, cas dans lequel sensiblement seule la partie exposée de ladite matière électriquement conductrice (28, 30) est couverte par un élément protecteur (34) comprenant une résine polypropylène, une résine de nylon ou une résine époxyde.

2. Dispositif CTP selon la revendication 1, la matière électriquement conductrice (28, 30) contenant de l'étain.

3. Batterie secondaire (70) comprenant une électrode positive (84), une électrode négative, et un séparateur et un électrolyte disposé entre ces postes, et incluant le dispositif CTP (74) selon la revendication 1 ou 2 qui est disposé entre l'électrode positive (84) et une borne (80) de l'électrode positive.

4. Batterie secondaire selon la revendication 3, qui est un type à cellule sèche, le dispositif CTP (74) étant disposé au sein d'un espace de languette d'électrode positive (72).

5. Batterie secondaire qui se présente sous la forme d'un bloc-batterie, incluant le dispositif CTP selon la revendication 1 ou 2, et un circuit de protection, qui sont tous deux disposés à l'extérieur de la batterie.
